# EUROPÄISCHE PATENTSCHRIFT

(11) **EP 1 690 903 B1**
(45) Veröffentlichungstag und Bekanntmachung des Hinweises auf die Patenterteilung: **02.04.2008**
(21) Anmeldenummer: 05090317.8
(22) Anmeldetag: 15.11.2005
(51) Int. Cl.: C09D 11/00, B41J 13/12

(54) **Tinte für den Tintenstrahldruck**
Ink for inkjet printing
Encre pour l'impression à jet d'encre

(30) Priorität: 09.02.2005 DE 202005002122 U
(43) Veröffentlichungstag der Anmeldung: 16.08.2006
(73) Patentinhaber: Francotyp-Postalia GmbH, 16547 Birkenwerder (DE)
(72) Erfinder: Gerhardt, Thomas c/o Francotyp-Postalia GmbH, 16547 Birkenwerder (DE)
(74) Vertreter: Jungblut, Bernhard Jakob

(56) Entgegenhaltungen:
- EP-A- 1 072 653
- EP-A- 1 149 878
- US-A1- 2003 098 904

## Beschreibung

### Gebiet der Erfindung

Die Erfindung betrifft eine Tinte enthaltend a) 0,1 bis 10 Gew-% (bezogen auf Trockenmasse) eines Farbstoffes oder einer Mischung von Farbstoffen, b) 1 bis 70 Gew-% Wasser, c) 1 bis 70 Gew-% einer C3-C6 α-Hydroxycarbonsäure, d) 0 bis 50 Gew-% eines von b) verschiedenen Lösungsmittels oder einer Mischung solcher Lösungsmittel und e) 1 bis 30 Gew-% eines Hilfsmittels oder einer Mischung von Hilfsmitteln, wobei sich die Mengenanteile der Komponenten a) bis e) stets zu 100 Gew-% addieren. Des Weiteren betrifft die Erfindung die Verwendung einer solchen Tinte, eine Frankiermaschine mit Mitteln zum Tintenstrahldruck bzw. Farbstrahldruck, wobei die Mittel zum Tintenstrahldruck einen Tintenbehälter mit einer solchen Tinte enthalten, sowie einen Gegenstand mit einem Aufdruck, welcher mittels einer solchen Tinte hergestellt ist.

### Stand der Technik und Hintergrund der Erfindung

Für den Tintenstrahldruck bzw. Farbstrahldruck werden besondere Tinten benötigt. Einerseits müssen die eingesetzten Tinten sofort in das zu bedruckende Material penetrieren, um nicht verschmieren zu können. Dies wird erreicht durch die Auswahl der Lösungmittel. Zum anderen muss das Lösungsmittel gewährleisten, dass eine Eintrocknung der Tinte an den Düsen und somit das Verkrusten der Düsen verhindert wird. Schließlich muss das Lösungsmittel mit Wasser mischbar oder emulgierbar sein, da zum Einsatz kommende Farbstoffe oft als wässrige Lösungen zur Verfügung gestellt werden. Schließlich müssen solche Tinten insbesondere im Bereich der Frankiermaschinen so gestaltet sein, dass eine Bedruckung auf vielen verschiedenen Papiersorten ohne Verlaufen der Tinte oder Ausfransen entlang der Papierfasern mit hinreichendem Kontrastreichtum gelingt.

Aus der Literaturstelle EP 1 072 653 A2 ist eine Tinte für den Tintenstrahldruck bekannt, welche grundsätzlich allen vorstehenden Erfordernissen genügt. Es hat sich jedoch gezeigt, dass bei Einsatz einer Reihe von Farbstoffen, insbesondere bei kationischen Farbstoffen, es bei Einsatz von Glykolether und/oder Lactaten als Lösungsmittel bzw. Penetrationsmittel zu starken Ausfällungen des Farbstoffes und zur irreversiblen Verstopfung der Tintendüsen eines Druckkopfes kommt.

Aus den Dokumenten US 2003/098904 A1 und EP 1149878 A2 sind Tinten bekannt, welche zwingend organische Aminverbindungen enthalten.

### Technisches Problem der Erfindung

Der Erfindung liegt daher das technische Problem zugrunde, eine Tinte anzugeben, in welcher insbesondere auch kationische Farbstoffe enthalten sein können, welche allen Anforderungen des Bereichs der Frankiermaschinen erfüllt und zugleich jedoch keine Ausfällungen des Farbstoffes zeigt.

### Grundzüge der Erfindung und bevorzugte Ausführungsformen

Zur Lösung dieses technischen Problems lehrt die Erfindung eine Tinte gemäß Anspruch 1.

Die Erfindung beruht auf der überraschenden Erkenntnis, dass wasserlösliche Farbstoffe, insbesondere kationische Farbstoffe, zu einer Tinte formuliert werden können, die praktisch keine Ausfällung des Farbstoffs zeigt, wenn als weiteres Hauptlösungsmittel neben Wasser eine C3-C6 α-Hydroxycarbonsäure eingesetzt wird. Ansonsten erfüllt eine erfindungsgemäße Tinte alle Anforderungen in Hinblick auf Kontrastreichtum und Abwesenheit von Verlaufen der Tinte und Ausfransen entlang der Papierfasern. Man erhält insgesamt ein allen Anforderungen vollauf genügendes Druckbild, und zwar auf vielen Papiersorten, einschließlich Recyclingpapieren, bei gleichzeitig reduzierter bzw. nicht vorhandener Neigung zum Ausfällen des Farbstoffes.

Bevorzugt ist es, wenn die Tinte a) 0,1 bis 6 Gew-% (bezogen auf Trockenmasse) eines Farbstoffes oder einer Mischung von Farbstoffen, b) 5 bis 50 Gew-%, vorzugsweise 25 bis 35 Gew-%, Wasser, c) 20 bis 60 Gew-%, vorzugsweise 30 bis 45 Gew-%, einer C3-C6 α-Hydroxycarbonsäure, d) 10 bis 30 Gew-%, vorzugsweise 15 bis 25 Gew-% eines von b) und c) verschiedenen Lösungsmittels oder einer Mischung solcher Lösungsmittel und e) 10 bis 30 Gew-%, vorzugsweise 12 bis 18 Gew-%, eines Hilfsmittels oder einer Mischung solcher Hilfsmittel enthält. Optional kann vorgesehen sein, dass die Summe der Anteile der Komponenten d) und e) mehr als 15 Gew-% beträgt.

Grundsätzlich kann die Komponente d) ein C2-C8 Alkanol mit 2 bis 4 Hydroxygruppen oder eine Mischung von zwei oder mehreren solcher Alkanole darstellen. In Frage kommen beispielsweise Ethylenglycol, 1,5-Pentandiol, 1,2-Propandiol, 1,2,6-Hexantriol, Glycerin und Mischungen von zwei oder mehreren dieser Verbindungen. Vorzugsweise wird Ethylenglycol eingesetzt. Bemerkenswert ist in diesem Zusammenhang, dass die Komponente d) nicht notwendigerweise ein hochsiedendes Alkanol sein muss. Der Einsatz von Ethylenglycol ist möglich, da die C3-C6 α-Hydroxycarbonsäure per se bereits einen hohen Siedepunkt hat und somit ein Eintrocknen von Tinte an den Düsen verhindert bzw. reduziert. Zudem werden trotz des Einsatzes des preiswerten Ethylenglycols gute Wegschlagzeiten und hohe Kontraststärken erreicht bei gleichzeitig vermindertem Ausfransen gedruckter Zeichen. Bevorzugt wird als α-Hydroxycarbonsäure Milchsäure (D-,L- oder D,L-Milchsäure) eingesetzt.

Eine erfindungsgemäße Tinte weist typischerweise Hilfsmittel wie Penetrationsmittel, Stellmittel, Biozide, Tenside, Puffersubstanzen, wasserlösliche Polymere usw. auf.

Als Penetrationsmittel kommen beispielsweise Mono(C1-C5)Alkylether von C2-C8 Alkanolen mit zwei bis vier Hydroxygruppen in Frage. Beispiele hierfür sind die Ethylenglykol-Monobutylether und Diethylenglykolmonobutylether. Alternativ können als Penetrationsmittel C3-C6 Alkylester von C2-C8 α-Hydroxycarbonsäuren eingesetzt werden, wobei der AlkylRest bevorzugt ein bis drei Kohlenstoffatome aufweist und geradkettig oder verzweigt sein kann. Die Säurekomponente hat bevorzugt zwei bis vier Kohlenstoffatome und kann beispielsweise D-,L- oder D,L-Milchsäure oder Glycolsäure sein. Konkrete Beispiele sind Methyllactat, Ethyllactat, Propyllactat, Isopropyllactat, Butylacetat, Isobutylacetat usw.. Die Mengen an Penetrationsmitteln sind mit der Maßgabe eingestellt, dass die Wegschlagzeit für 100 pl + 50 pl Tinte auf üblichem Briefumschlagpapier oder Pappe 2 Sekunden oder weniger beträgt (gemessen und berechnet auf Basis der Wegschlagzeit eines 0,5 µl Tropfens im Versuch gemäß der Formel in der Literaturstelle EP 1072653 A2).

Als Stellmittel kommen fachübliche Stellsalze in Frage. Ein Beispiel hierfür ist Natriumlactat.

Als Biozid kommen alle handelsübliche Konservierungsmittel, welche für Tinten verwendet werden, in Frage. Beispiele hierfür sind Proxel®GXL und Parmetol® A26.

Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, die die Eigenschaften des Farbstoffs nicht verändern, möglich. Beispiele für geeignete Tenside sind Betaine, ethoxilierte Diole usw.. Beispiele sind die Produktreihen Surfynol® und Tergitol®. Die Menge an Tensiden wird mit der Maßgabe gewählt, dass die Oberflächenspannung der Tinte im Bereich von 15 bis 60, vorzugsweise 25 bis 45 mN/m, gemessen bei 25 °C, liegt.

Es kann ein Puffersystem eingerichtet sein, welches den PH-Wert im Bereich von 2,5 bis 8,5, insbesondere im Bereich von 5 bis 8, stabilisiert. Geeignete Puffersysteme sind Lithiumacetat, Boratpuffer, Triethanolamin oder Essigsäure/Natriumacetat.

Zur Einstellung der Viskosität der Tinte können wasserlösliche Polymere vorgesehen sein. Hier kommen alle für übliche Tintenformulierungen geeignete Polymere in Frage. Beispiele sind wasserlösliche Stärke, insbesondere mit einem mittleren Molekulargewicht von 3.000 bis 7.000, Polyvinylpyrolidon, insbesondere mit einem mittleren Molekulargewicht von 25.000 bis 250.000, Polyvinylalkohol, insbesondere mit einem mitteleren Molekulargewicht von 10.000 bis 20.000, Xanthan-Gummi, Carboxy-Methylcellulose, Ethylenoxid/Propylenoxid-Blockcopolymer, insbesondere mit einem mittleren Molekulargewicht von 1.000 bis 8.000. Ein Beispiel für das letztgenannte Blockcopolymer ist die Produktreihe Pluronic®.

Das Penetrationsmittel wird, bezogen auf die Gesamtmenge an Tinte, 5 bis 25 Gew-%, vorzugsweise 10 bis 20 Gew-%, betragen. Der Anteil an Biozid, bezogen auf die Gesamtmenge an Tinte, kann im Bereich von 0 bis 0,5 Gew-%, vorzugsweise 0,1 bis 0,3 Gew-%, liegen. Der Anteil an Tensid, bezogen auf die Gesamtmenge an Tinte, kann im Bereich von. 0 bis 0,2 Gew-% liegen. Der Anteil an Stellmitteln kann, bezogen auf die Gesamtmenge an Tinte, 0 bis 1 Gew-%, vorzugsweise 0,1 bis 0,5 Gew-%, betragen.

Zu den Hilfsmitteln werden auch sonstige Komponenten gezählt, wie beispielsweise Essigsäure, Ameisensäure oder n-Methyl-Pyrolidon aus der eingesetzten Farbstofflösung.

Grundsätzlich können im Rahmen der Erfindung beliebige Farbstoffe eingesetzt werden. Vorzugsweise handelt es sich um einen kationischen Farbstoff. Beispiele geeigneter Farbstoffe sind: Brillantschwarz C.I. Nr. 28440, Chromogenschwarz C.I. Nr. 14645, Direkttiefschwarz E C.I. Nr. 30235, Echtschwarzsalz B C.I. Nr. 37245, Echtschwarzsalz K C.I. Nr. 37190, Sudanschwarz HB C.I. 26150, Naphtolschwarz C.I. Nr. 20470, Bayscript® Schwarz flüssig, C.I. Basic Black 11, C.I. Basic Blue 154, Cartasol® Türkis K-ZL flüssig, Cartasol® Türkis K-RL flüssig (C.I. Basic Blue 140), Cartasol Blau K5R flüssig. Geeignet sind des Weiteren z. B. die im Handel erhältlichen Farbstoffe Hostafine® Schwarz TS flüssig (vertrieben von Clariant GmbH Deutschland), Bayscript® Schwarz flüssig (C.I.-Gemisch, vertrieben von Bayer AG Deutschland), Cartasol® Schwarz MG flüssig (C.I. Basic Black 11, Eingetragenes Markenzeichen der Clariant GmbH Deutschland), Flexonylschwarz® PR 100 (E C.I. Nr. 30235, vertrieben von Hoechst AG), Rhodamin® B, Cartasol® Orange K3 GL, Cartasol® Gelb K4 GL, Cartasol® K GL, oder Cartasol® Rot K-3B. Der letztgenannte Farbstoff ist bevorzugt.

Eine erfindungsgemäße Tinte enthält vorzugsweise keine Verlackungsmittel, wie in anderen Zusammenhängen beispielsweise in der Literaturstelle EP 0141067 A beschrieben.

Des Weiteren betrifft die Erfindung einen Tintenstrahldrucker, insbesondere in einem Frankiermaschinensystem, mit einem Tintenreservoir sowie eine mit dem Tintenreservoir verbundenen Tintenstrahldruckkopf, wobei das Tintenreservoir eine erfindungsgemäße Tinte enthält. Insbesondere an den Druck einer Frankiermaschine werden besonders hohe Anforderungen in Hinblick auf das Druckbild gestellt, und zwar auf vielerlei Arten von Papier und Pappen, welche von der erfindungsgemäßen Tinte erfüllt werden.

Des Weiteren umfasst die Erfindung daher eine Frankiermaschine mit einem Tintenstrahldrucker, wobei der Tintenstrahldrucker einen Tintenbehälter mit einer erfindungsgemäßen Tinte enthält, sowie einen Gegenstand, beispielsweise ein Poststück, wie Brief, Päckchen, oder Packet mit einem Aufdruck, welcher mittels einer erfindungsgemäßen Tinte hergestellt ist. Hierbei kann der Aufdruck auf einem auf den Gegenstand aufgeklebten Aufkleber angebracht sein.

Im Folgenden wird die Erfindung anhand von nichtlimitierenden Ausführungsbeispielen näher erläutert.

### Beispiel 1: Tintenzusammensetzung

Es wurde eine Tinte hergestellt mit den folgenden Komponenten:
25,0 Gew-% Cartasol Rot K-3B flüssig,
38,6 Gew-% Milchsäure (80 %ig),
19,6 Gew-% Ethandiol (Ethylenglykol),
1,6 Gew-% Wasser,
14,7 Gew-% Ethylenglykol-Monobutylether,
0,2 Gew-% Parmetol A26,
0,3 Gew-% Natrium-Lactat Lösung (50%ig).

Der Gesamtgehalt an Wasser unter Berücksichtigung des mit dem Cartasol mit eingebrachten Wassers liegt bei 30 Gew-%, bezogen auf die Gesamtmenge an Tinte. Durch den Einsatz von Cartasol ist zudem 1 Gew-% Essigsäure, bezogen auf die Gesamtmenge an Tinte, enthalten.

### Beispiel 2: Tinteneigenschaften

Die Penetrationszeit eines Tropfens von 0,5 µl Tinte auf handelsüblichem Briefumschlagpapier wurde zu 1,8 s oder kleiner gemessen, i.e. die Wegschlagzeit für einen 100 pl Tropfen liegt bei ca. 0,17 s und weniger. Die kinematische Viskosität der Tinte liegt im für Tintenstrahldrucker üblichen Bereich von 4 bis 9,5 mm²/s. Die Oberflächenspannung der Tinte liegt im üblichen Bereich zwischen 25 bis 40 mN/m. Eine Ausfällung des Farbstoffes ist auch nach mehrtägiger Lagerzeit nicht feststellbar. Der Druck mittels einer handelsüblichen Frankiermaschine gelingt auch nach mehrtägiger Standzeit ohne Probleme und mit allen Anforderungen genügendem Druckbild.

### Beispiel 3: Vergleichstinte

Zu Vergleichszwecken wurde eine Tinte mit folgender Zusammensetzung hergestellt:
25 Gew-% Cartasol Rot K-3B flüssig,
40 Gew-% 1,2-Propandiol,
10 Gew-% Wasser,
25 Gew-% Diethylenglykol-Monobutylether.

Die Tinte wurde in einem Tintenstrahldrucker einer handelsüblichen Frankiermaschine eingesetzt. Es zeigten sich nach einer Standzeit von 24 h nach Gebrauch irreversible Verstopfungen der Tintendüsen. Genauere Untersuchungen ergaben, dass beachtliche Mengen des Farbstoffes ausgefallen waren und zu der Verstopfung führten.

## Patentansprüche

1. Tinte enthaltend oder bestehend aus:
a) 0,1 bis 10 Gew-% (bezogen auf Trockenmasse) eines Farbstoffes oder einer Mischung von Farbstoffen,
b) 1 bis 70 Gew-% Wasser,
c) 1 bis 70 Gew-% einer C3-C6 α-Hydroxycarbonsäure oder einer Mischung solcher Säuren,
d) 0 bis 50 Gew-% eines von b) und c) verschiedenen Lösungsmittels oder einer Mischung solcher Lösungsmittel,
e) 0,1 bis 30 Gew-% eines Hilfsmittels oder einer Mischung von Hilfsmitteln,
wobei die Tinte keine organischen Aminverbindungen enthält, und
wobei sich die Mengenanteile der Komponenten a) bis e) stets zu 100 Gew-% addieren.

2. Tinte nach Anspruch 1 enthaltend oder bestehend aus:
0,1 bis 6 Gew-% Komponente a),
5 bis 50 Gew-%, vorzugsweise 25 bis 35 Gew-%, Komponente b),
mehr als 20 bis 60 Gew-%, vorzugsweise 30 bis 45 Gew-%, Komponente c),
10 bis 30 Gew-%, vorzugsweise 15 bis 25 Gew-%, Komponente d) und
10 bis 30 Gew-%, vorzugsweise 12 bis 18 Gew-%, Komponente e).

3. Tinte nach Anspruch 1 oder 2, wobei die Komponente d) ein C2-C8 Alkanol mit 2 bis 4 Hydroxy-Gruppen oder eine Mischung von zwei oder mehreren solcher Alkanole ist.

4. Tinte nach Anspruch 3, wobei die Komponente d) ausgewählt ist aus der Gruppe bestehend aus "Ethylenglycol, 1,5-Pentandiol, 1,2-Propandiol, 1,2,6-Hexantriol, Glycerin, und Mischungen von zwei oder mehreren dieser Verbindungen".

5. Tinte nach einem der Ansprüche 1 bis 4, wobei die Komponente c) Milchsäure ist.

6. Tinte nach einem der Ansprüche 1 bis 5, wobei die Komponente e) ausgewählt ist aus der Gruppe bestehend aus "Penetrationsmittel, Stellmittel, Biozide, Tenside, Puffersubstanzen, wasserlösliche Polymere, sonstige Zusatzstoffe, und Mischungen von zwei oder mehreren dieser Substanzen".

7. Tinte nach einem der Ansprüche 1 bis 6, wobei die Komponente a) ein kationischer Farbstoff ist.

8. Tintenstrahldrucker, insbesondere in einem Frankiermaschinensystem, mit einem Tintenreservoir sowie eine mit dem Tintenreservoir verbundenen Tintenstrahldruckkopf, wobei das Tintenreservoir eine Tinte nach einem der Ansprüche 1 bis 7 enthält.

9. Frankiermaschine mit einem Tintenstrahldrucker, wobei der Tintenstrahldrucker einen Tintenbehälter mit einer Tinte nach einem der Ansprüche 1 bis 7 umfasst.

10. Gegenstand mit einem Aufdruck, wobei der Aufdruck mit einer Tinte nach einem der Ansprüche 1 bis 7 hergestellt ist.

## Claims

1. An ink comprising or composed of:
a) 0.1 to 10 wt-% (referred to dry mass) of a dye or of a mixture of dyes,
b) 1 to 70 wt-% of water,
c) 1 to 70 wt-% of a C3-C6 α-hydroxy carboxylic acid or of a mixture of such acids,
d) 0 to 50 wt-% of a solvent different from b) and c) or of a mixture of such solvents,
e) 0.1 to 30 wt-% of an auxiliary agent or of a mixture of auxiliary agents,
wherein the ink does not contain any organic amine compounds, and
wherein the relative amounts of the components a) to e) always add up to 100 wt-%.

2. The ink according to claim 1 comprising or composed of:
0.1 to 6 wt-% of component a),
5 to 50 wt-%, preferably 25 to 35 wt-%, of component b),
more than 20 to 60 wt-%, preferably 30 to 45 wt-%, of component c),
10 to 30 wt-%, preferably 15 to 25 wt-%, of component d) and
10 to 30 wt-%, preferably 12 to 18 wt-%, of component e).

3. The ink according to claim 1 or 2, wherein the component d) is a C2-C8 alkanol with 2 to 4 hydroxy groups or a mixture of two or more of such alkanols.

4. The ink according to claim 3, wherein the component d) is selected from the group composed of "ethylene glycol, 1,5-pentanediol, 1,2-propanediol, 1,2,6-hexanetriol, glycerin, and mixtures of two or more of these compounds".

5. The ink according to one of claims 1 to 4, wherein the component c) is lactic acid.

6. The ink according to one of claims 1 to 5, wherein the component e) is selected from the group composed of "penetration agents, floating agents, biocides, tensides, buffer substances, water-soluble polymers, other additives, and mixtures of two or more of these substances".

7. The ink according to one of claims 1 to 6, wherein the component a) is a cationic dye.

8. An ink jet printer, in particular in a franking machine system, comprising an ink container and an ink jet printing head connected with the ink container, wherein the ink container comprises an ink according to one of claims 1 to 7.

9. A franking machine comprising an ink jet printer, wherein the ink jet printer comprises an ink container with an ink according to one of claims 1 to 7.

10. An object comprising an overprint, wherein the overprint is produced with an ink according to one of claims 1 to 7.

## Revendications

1. Encre comprenant ou se composant de:
a) 0,1 à 10 pour cent en poids (par rapport à masse sèche) d'un colorant ou d'un mélange de colorants,
b) 1 à 70 pour cent en poids d'eau,
c) 1 à 70 pour cent en poids d'un acide C3-C6 α-hydroxy carboxylique ou d'un mélange de tels acides,
d) 0 à 50 pour cent en poids d'un solvant différent de b) et c) ou d'un mélange de tels solvants,
e) 0,1 à 30 pour cent en poids d'un agent auxiliaire ou d'un mélange d'agents auxiliaires,
dans laquelle l'encre ne comprend pas de composés aminés organiques, et
dans laquelle la somme des quantités relatives des composants a) à e) est toujours de 100 pour cent en poids.

2. Encre selon la revendication 1 comprenant ou se composant de:
0,1 à 6 pour cent en poids du composant a),
5 à 50 pour cent en poids, de préférence 25 à 35 pour cent en poids, du composant b),
plus de 20 à 60 pour cent en poids, de préférence 30 à 45 pour cent en poids, du composant c),
10 à 30 pour cent en poids, de préférence 15 à 25 pour cent en poids, du composant d), et
10 à 30 pour cent en poids, de préférence 12 à 18 pour cent en poids, du composant e).

3. Encre selon la revendication 1 ou 2, dans laquelle le composant d) est un C2-C8 alcanol avec 2 à 4 groupes hydroxy ou un mélange de deux ou plus de tels alcanols.

4. Encre selon la revendication 3, dans laquelle le composant d) est choisi à partir du groupe comprenant «éthylène glycol, pentan-1,5-diol, propan-1,2-diol, hexan-1,2,6-triol, glycérol, et mélanges de deux ou plus de ces composés».

5. Encre selon une des revendications 1 à 4, dans laquelle le composant c) est l'acide lactique.

6. Encre selon une des revendications 1 à 5, dans laquelle le composant e) est choisi à partir du groupe comprenant «agents de pénétration, agents de flottement, biocides, substances tensioactives, substances de tampon, polymères solubles dans l'eau, d'autres additifs, et mélanges de deux ou plus de ces substances».

7. Encre selon une des revendications 1 à 6, dans laquelle le composant a) est un colorant cationique

8. Imprimante à jet d'encre, en particulier dans un système de machine à affranchir, comprenant un conteneur d'encre et une tête d'impression à jet d'encre liée avec le conteneur d'encre, dans laquelle le conteneur d'encre comprend une encre selon une des revendications 1 à 7.

9. Machine à affranchir comprenant une imprimante à jet d'encre, dans laquelle l'imprimante à jet d'encre comprend un conteneur d'encre avec une encre selon une des revendications 1 à 7.

10. Objet comprenant une impression, dans lequel l'impression est produite avec une encre selon une des revendications 1 à 7.
